(19) Europäisches Patentamt
European Patent Office
Office européen des brevets

(11) Veröffentlichungsnummer : **0 597 807 A1**

(12) **EUROPÄISCHE PATENTANMELDUNG**

(21) Anmeldenummer : **93810765.3**

(22) Anmeldetag : **03.11.93**

(51) Int. Cl.$^5$ : **A01N 47/36,** // (A01N47/36, 47:36, 25:32)

(30) Priorität : **12.11.92 CH 3493/92**

(43) Veröffentlichungstag der Anmeldung : **18.05.94 Patentblatt 94/20**

(84) Benannte Vertragsstaaten : **AT BE CH DE DK ES FR GB GR IE IT LI LU MC NL PT SE**

(71) Anmelder : **CIBA-GEIGY AG**
**Klybeckstrasse 141**
**CH-4002 Basel (CH)**

(72) Erfinder : **Kerber, Elmar, Dr.**
**Niederwihl 131**
**D-79733 Görwihl (DE)**

(54) **Selektiv-herbizides Mittel.**

(57) Mischungen aus einer herbizid wirksamen Menge eines Pyridylsulfonylharnstoffes der Formel I,

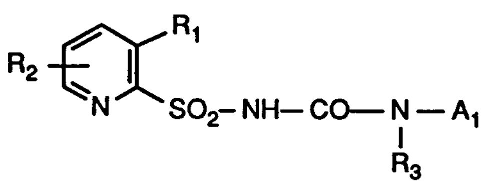

(I),

worin $R_1$, $R_2$, $R_3$ und A die in Anspruch 1 angegebenen Bedeutungen haben, und aus einer herbizid-antagonistisch wirksamen Menge eines Sulfamoylphenylharnstoffes der Formel II,

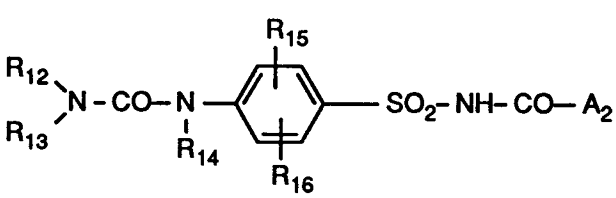

(II),

worin $R_{12}$ bis $R_{16}$ und $A_2$ die im Anspruch 1 angegebenen Bedeutungen haben, eignen sich gut zur Unkrautbekämpfung in Nutzpflanzenkulturen, insbesondere Mais.

EP 0 597 807 A1

Die vorliegende Erfindung betrifft ein selektiv-herbizides Mittel zur Bekämpfung von Gräsern und Unkräutern in Kulturen von Nutzpflanzen, insbesondere in Maiskulturen, welches aus einem Herbizid und einem Safener (Gegenmittel, Antidot) besteht, welches die Nutzpflanzen, nicht aber die Unkräuter vor der phytotoxischen Wirkung des Herbizides bewahrt, sowie die Verwendung dieses Mittels oder der Kombination Herbizid und Safener zur Unkrautbekämpfung in Nutzpflanzenkulturen.

Beim Einsatz von Herbiziden können in Abhängigkeit von Faktoren wie beispielsweise Dosis des Herbizids und Applikationsart, Art der Kulturpflanze, Bodenbeschaffenheit und klimatischen Bedingungen, wie beispielsweise Belichtungsdauer, Temperatur und Niederschlagsmengen, die Kulturpflanzen in erheblichem Maße geschädigt werden. Insbesondere kann es zu starken Schädigungen kommen, wenn im Rahmen der Fruchtfolge nach Kulturpflanzen, die gegen die Herbizide resistent sind, andere Kulturpflanzen angebaut werden, welche keine oder nur unzureichende Resistenz gegenüber den Herbiziden aufweisen.

Um diesem Problem zu begegnen, sind schon verschiedene Stoffe vorgeschlagen worden, welche befähigt sind, die schädigende Wirkung des Herbizids auf die Kulturpflanze spezifisch zu antagonisieren, das heißt, die Kulturpflanze zu schützen ohne dabei die Herbizidwirkung auf die zu bekämpfenden Unkräuter merklich zu beeinflussen. Dabei hat es sich gezeigt, daß die vorgeschlagenen Safener sowohl bezüglich der Kulturpflanzen als auch bezüglich des Herbizids und gegebenenfalls auch in Abhängigkeit von der Applikationsart oft sehr artspezifisch wirken, das heißt ein bestimmter Safener eignet sich oft nur für eine bestimmte Kulturpflanze und eine spezielle Herbizid-Stoffklasse.

Es wurde nun gefunden, daß sich aus EP-A-O 365 484 bekannte Sulfamoylphenylharnstoffe zum Schützen von Kulturpflanzen vor der phytotoxischen Wirkung einer besonderen Klasse von Pyridylsulfonylharnstoffherbiziden eignen.

Erfindungsgemäß wird somit ein selektiv-herbizides Mittel vorgeschlagen, welches dadurch gekennzeichnet ist, daß es neben inerten Träger- und Zusatzstoffen als wirksame Komponente eine Mischung aus

a) einer herbizid wirksamen Menge eines Pyridylsulfonylharnstoffes der Formel I

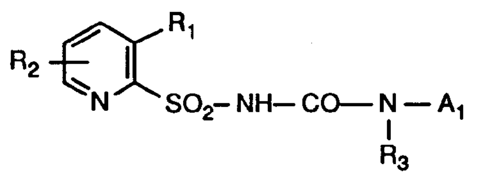

(I),

worin

$R_1$ $Si(CH_3)_3$, $-OSO_2NR_4R_5$, $-NR_6R_7$ oder Jod,

$R_2$ Wasserstoff, $C_1$-$C_3$-Alkyl, $C_1$-$C_3$-Haloalkyl, Halogen, $NO_2$, CN, $C_1$-$C_3$-Alkoxy, $C_1$-$C_3$-Haloalkoxy, $C_1$-$C_3$-Alkylthio, $C_1$-$C_3$-Alkoxy-$C_1$-$C_3$-alkyl, $C_1$-$C_3$-Alkoxycarbonyl, $C_1$-$C_3$-Alkylamino, Di($C_1$-$C_3$-alkyl)amino, $C_1$-$C_3$-Alkylsulfinyl, $C_1$-$C_3$-Alkylsulfonyl, $SO_2NR_8R_9$ oder $C(O)NR_8R_9$ ist,

$R_8$, $R_9$ unabhängig voneinander Wasserstoff, $C_1$-$C_3$-Alkyl, $C_3$- oder $C_4$-Alkenyl, Propargyl, oder zusammen $-(CH_2)_4-$, $-(CH_2)_5-$ oder $-CH_2CH_2OCH_2CH_2-$ sind, $R_3$ Wasserstoff oder $CH_3$,

$R_4$ Wasserstoff, $C_1$-$C_3$-Alkyl, $C_3$-$C_4$-Alkenyl, $C_1$-$C_3$-Alkoxy oder Propargyl und

$R_5$ Wasserstoff, $C_1$-$C_3$-Alkyl, $C_3$-$C_4$-Alkenyl oder Propargyl ist, oder

$R_4$ und $R_5$ zusammen $-(CH_2)_4-$, $-(CH_2)_5-$ oder $-CH_2CH_2OCH_2CH_2-$ sind,

$R_6$ Wasserstoff, $C_1$-$C_4$-Alkyl, $C_1$-$C_4$-Alkylsulfonyl, Phenylsulfonyl, wobei die Phenylgruppe durch Halogen, $C_1$-$C_4$-Alkyl und $C_1$-$C_4$-Alkoxy substituiert sein kann, $C_3$- oder $C_4$-Alkenyl oder $C_3$- oder $C_4$-Alkinyl,

$R_7$ $C_1$-$C_4$-Alkylsulfonyl oder Phenylsulfonyl, wobei die Phenylgruppe durch Halogen, $C_1$-$C_4$-Alkyl und $C_1$-$C_4$-Alkoxy substituiert sein kann,

$A_1$ eine Gruppe der Formel

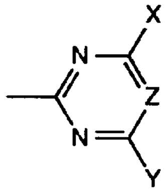

,

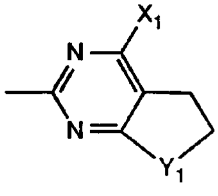

,

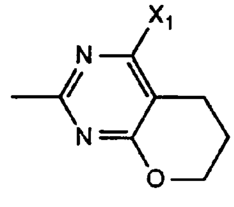

,

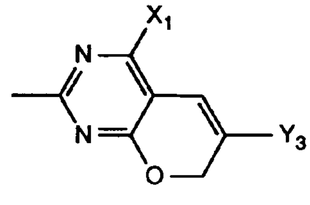

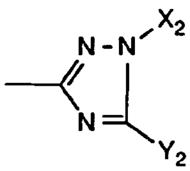 , 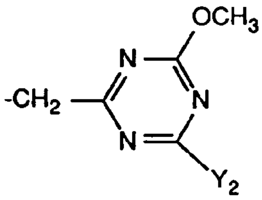 , 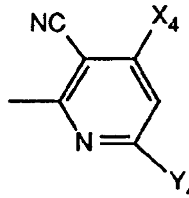 oder 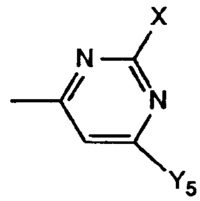 ,

X Wasserstoff, Halogen, $C_1$-$C_3$-Alkyl, $C_1$-$C_3$-Alkoxy, wobei die beiden letztgenannten Gruppen ein- oder mehrfach durch Halogen oder einfach durch $C_1$-$C_3$-Alkoxy substituiert sein können,
Y Wasserstoff, $C_1$-$C_3$-Alkyl, $C_1$-$C_3$-Alkoxy oder $C_1$-$C_3$-Alkylthio, wobei die drei letztgenannten Gruppen ein- oder mehrfach durch Halogen oder ein- oder zweifach durch $C_1$-$C_3$-Alkoxy oder $C_1$-$C_3$-Alkylthio substituiert sein können, ferner eine Gruppe der Formel $NR_{10}R_{11}$, $C_3$-$C_6$-Cycloalkyl, $C_2$-$C_4$-Alkenyl, $C_2$-$C_4$-Alkinyl, $C_3$- oder $C_4$-Alkenyloxy oder $C_3$- oder $C_4$-Alkinyloxy,
Z CH oder N ist,
$R_{10}$ und $R_{11}$ unabhängig voneinander Wasserstoff, $C_1$-$C_3$-Alkyl oder $C_3$ oder $C_4$-Alkenyl sind,
$X_1$ $CH_3$, $OCH_3$, $OC_2H_5$ oder $OCF_2H$,
$Y_1$ -O- oder $-CH_2-$,
$X_2$ $CH_3$, $C_2H_5$ oder $CH_2CF_3$,
$Y_2$ $OCH_3$, $OC_2H_5$, $SCH_3$, $SC_2H_5$, $CH_3$ oder $C_2H_5$,
$X_3$ $CH_3$ oder $OCH_3$,
$Y_3$ Wasserstoff oder $CH_3$,
$X_4$ $CH_3$, $OCH_3$, $OC_2H_5$, $CH_2OCH_3$ oder Chlor,
$Y_4$ $CH_3$, $OCH_3$, $OC_2H_5$ oder Chlor und
$Y_5$ $CH_3$, $C_2H_5$, $OCH_3$ oder Chlor ist,
oder einem N-Oxid oder einem Salz der Verbindung der Formel I,
und
b) einer herbizid-antagonistisch wirksamen Menge eines Sulfamoylphenylharnstoffes der Formel II

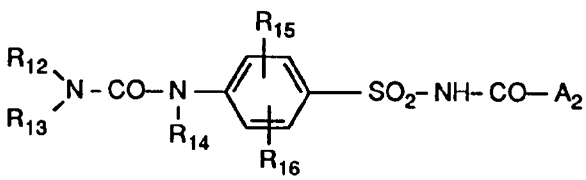 (II),

worin
$A_2$ eine Gruppe

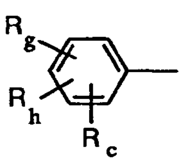 , 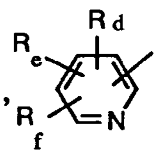 , 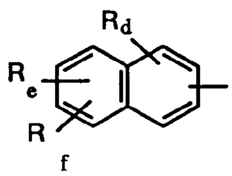 , 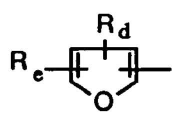 oder 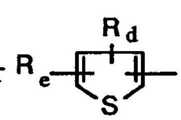

ist,
$R_{12}$ und $R_{13}$ unabhängig voneinander für Wasserstoff, $C_1$-$C_8$-Alkyl, $C_3$-$C_8$-Cycloalkyl $C_3$-$C_6$-Alkenyl, $C_3$-$C_6$-Alkinyl,

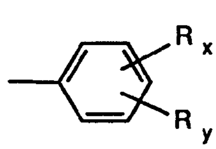

oder durch $C_1$-$C_4$-Alkoxy oder

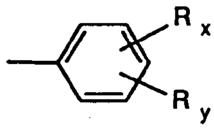

substituiertes $C_1$-$C_4$-Alkyl, oder
$R_{12}$ und $R_{13}$ gemeinsam für eine $C_4$-$C_6$-Alkylenbrücke oder eine durch Sauerstoff, Schwefel, SO, $SO_2$, NH oder -N($C_1$-$C_4$-Alkyl)- unterbrochene $C_4$-$C_6$-Alkylenbrücke stehen,
$R_{14}$ Wasserstoff oder $C_1$-$C_4$-Alkyl ist,
$R_{15}$ und $R_{16}$ unabhängig voneinander für Wasserstoff, Halogen, Cyan, Nitro, Trifluormethyl, $C_1$-$C_4$-Alkyl, $C_1$-$C_4$-Alkoxy, $C_1$-$C_4$-Alkylthio, $C_1$-$C_4$-Alkylsulfinyl, $C_1$-$C_4$-Alkylsulfonyl, -$COOR_j$, $CONR_kR_m$, -$COR_n$, -$SO_2NR_kR_m$ oder -$OSO_2$-$C_1$-$C_4$-Alkyl, oder $R_{15}$ und $R_{16}$ gemeinsam für eine $C_3$ oder $C_4$-Alkylenbrücke, die durch Halogen oder $C_1$-$C_4$-Alkyl substituiert sein kann, oder eine $C_3$-$C_4$-Alkenylenbrücke, die durch Halogen oder $C_3$- oder $C_4$-Alkyl substituiert sein kann, oder eine Butadienylenbrücke, die durch Halogen oder $C_1$-$C_4$-Alkyl substituiert sein kann, und
$R_g$ und $R_h$ unabhängig voneinander für Wasserstoff, Halogen, $C_1$-$C_4$-Alkyl, Trifluormethyl, Methoxy, Methylthio oder -$COOR_j$ stehen, wobei
$R_c$ Wasserstoff, Halogen, $C_1$-$C_4$-Alkyl oder Methoxy,
$R_d$ Wasserstoff, Halogen, Nitro, $C_1$-$C_4$-Alkyl, $C_1$-$C_4$-Alkoxy, $C_1$-$C_4$-Alkylthio, $C_1$-$C_4$-Alkylsulfinyl, $C_1$-$C_4$-Alkylsulfonyl, -$COOR_j$ oder -$CONR_kR_m$ ist,
$R_e$ Wasserstoff, Halogen, $C_1$-$C_4$-Halogen, $C_1$-$C_4$-Alkyl, -$COOR_j$, Trifluormethyl oder Methoxy bedeuten oder $R_d$ und $R_e$ stehen gemeinsam für eine $C_3$-$C_4$-Alkylenbrücke,
$R_f$ Wasserstoff, Halogen oder $C_1$-$C_4$-Alkyl ist,
$R_x$ und $R_y$ unabhängig voneinander Wasserstoff, Halogen, $C_1$-$C_4$-Alkyl, $C_1$-$C_4$-Alkoxy, $C_1$-$C_4$-Alkylthio, -$COOR_{17}$, Trifluormethyl, Nitro oder Cyano,
$R_j$, $R_k$ und $R_m$ unabhängig voneinander Wasserstoff oder $C_1$-$C_4$-Alkyl ist,
$R_k$ und $R_m$ gemeinsam eine $C_4$-$C_6$-Alkylenbrücke oder eine durch Sauerstoff, NH oder -N($C_1$-$C_4$-Alkyl)- unterbrochene $C_4$-$C_6$-Alkylenbrücke bilden;
$R_{17}$ Wasserstoff, $C_1$-$C_{10}$-Alkyl, $C_1$-$C_4$-Alkoxy-$C_1$-$C_4$-alkyl, $C_1$-$C_4$-Alkylthio-$C_1$-$C_4$-alkyl, Di-$C_1$-$C_4$-alkylamino-$C_1$-$C_4$-alkyl, Halogen-$C_1$-$C_8$-alkyl, $C_2$-$C_8$-Alkenyl, Halogen-$C_2$-$C_8$-alkenyl, $C_3$-$C_8$-Alkinyl, $C_3$-$C_7$-Cycloalkyl, Halogen-$C_3$-$C_7$-cycloalkyl, $C_1$-$C_8$-Alkylcarbonyl, Allylcarbonyl, $C_3$-$C_7$-Cycloalkylcarbonyl, Benzoyl, das unsubstituiert oder am Phenylring gleich oder verschieden bis zu dreifach durch Halogen, $C_1$-$C_4$-Alkyl, Halogen-$C_1$-$C_4$-alkyl, Halogen-$C_1$-$C_4$-alkoxy oder $C_1$-$C_4$-Alkoxy substituiert ist; oder Furoyl, Thienyl; oder $C_1$-$C_4$-Alkyl substituiert durch Phenyl, Halogenphenyl, $C_1$-$C_4$-Alkylphenyl, $C_1$-$C_4$-Alkoxyphenyl, Halogen-$C_1$-$C_4$-alkylphenyl, Halogen-$C_1$-$C_4$-alkoxyphenyl, $C_1$-$C_6$-Alkoxycarbonyl, $C_1$-$C_4$-Alkoxy-$C_1$-$C_8$-alkoxycarbonyl, $C_3$-$C_8$-Alkenyloxycarbonyl, $C_3$-$C_8$-Alkinyloxycarbonyl, $C_1$-$C_8$-Alkylthiocarbonyl, $C_3$-$C_8$-Alkenylthiocarbonyl, $C_3$-$C_8$-Alkinylthiocarbonyl, Carbamoyl, Mono-$C_1$-$C_4$-alkylaminocarbonyl, Di-$C_1$-$C_4$-alkylaminocarbonyl; oder Phenylaminocarbonyl, das unsubstituiert oder am Phenyl gleich oder verschieden bis zu dreifach durch Halogen, $C_1$-$C_4$-Alkyl, Halogen-$C_1$-$C_4$-alkyl, Halogen-$C_1$-$C_4$-alkoxy oder $C_1$-$C_4$-Alkoxy oder einfach durch Cyano oder Nitro substituiert ist, oder Dioxolan-2-yl, das unsubstituiert ist oder durch ein oder zwei $C_1$-$C_4$-Alkylgruppen substituiert ist, oder Dioxan-2-yl, das unsubstituiert ist oder durch ein oder zwei $C_1$-$C_4$-Alkylgruppen substituiert ist, oder $C_1$-$C_4$-Alkyl, das durch Cyano, Nitro, Carboxyl oder $C_1$-$C_8$-Alkylthio-$C_1$-$C_8$-alkoxycarbonyl substituiert ist, und
$R_n$ $C_1$-$C_4$-Alkyl, Phenyl oder durch Halogen, $C_1$-$C_4$-Alkyl, Methoxy, Nitro oder Trifluormethyl substituiertes Phenyl ist,
oder einem Salz der Verbindung der Formel II, enthält.

Gegenstand der vorliegenden Erfindung ist ferner die Verwendung des erfindungsgemäßen Mittels zur Bekämpfung von Unkräutern und Gräsern in Nutzpflanzenkulturen, insbesondere Mais.

Unter Halogen ist in den Definitionen in den Verbindungen der Formeln I und II Fluor, Chlor, Brom und Jod, vorzugsweise jedoch Fluor, Chlor und Brom, insbesondere Chlor zu verstehen. Unter Alkyl ist geradkettiges oder verzweigtes Alkyl zu verstehen; zum Beispiel Methyl, Aethyl, n-Propyl, i-Propyl oder die vier isomeren Butyl. Längerkettige Alkylgruppen umfassen die Isomeren von Pentyl, Hexyl, Heptyl oder Oktyl, wobei jeweils die unverzweigten Ketten bevorzugt sind. Unter Alkoxy ist zu verstehen: Methoxy, Aethoxy, n-Propyloxy, i-Propyloxy oder die vier isomeren Butyloxygruppen, insbesondere aber Methoxy, Aethoxy oder i-Propyloxy. Durch Alkoxy substituiertes Alkyl steht vorzugsweise für Methoxymethyl, Aethoxymethyl, Methoxyethyl und Aethoxyethyl, insbesondere aber Methoxyethyl. Durch gegebenenfalls substituiertes Phenyl substituiertes Alkyl steht vorzugsweise für Abkömmlinge von Phenylethyl oder Benzyl. Typische Alkenyl-

und Alkinylgruppen sind Allyl, 2-Butenyl, Methallyl, 3-Butenyl, Propargyl, 2-Butinyl, 3-Butinyl oder 2-Pentenyl. Beispiele für Cycloalkyl sind Cyclopropyl, Cyclopentyl, Cyclohexyl oder Cycloheptyl, vorzugsweise aber Cyclopentyl und Cyclohexyl. Heterocyclen sind z.B. Pyrrolidin, Piperidin, Pyrazolidin, Imidazolidin, Oxazolidin, Thiazolidin, Morpholin, Thiomorpholin, Piperazin oder Hexahydroazepin sowie bei Schwefelhaltigen Ringen deren Oxidationsprodukte. In Alkylthio, Alkylsulfinyl oder Alkylsulfonyl hat Alkyl die oben aufgezählten konkreten Bedeutungen.

Wenn Substituenten gemeinsam für eine $C_3$-$C_4$-Alkylenbrücke, $C_3$-$C_4$-Alkenylenbrücke oder Butadienylenbrücke, die jeweils durch Halogen oder $C_1$-$C_4$-Alkyl substituiert sein kann, stehen, werden z.B. zusammen mit einem Phenylring, an welchem die Brücke gebunden ist, zweikernige Systeme gebildet wie beispielsweise 1,2,3,4-Tetrahydronaphtalin, 1-Chlor-2-methyl-3,4-dihydronaphtalin, Indan, 1,2-Dihydronaphtalin, Inden, Naphtalin, 2-Methylnaphtalin, 1-n-Butylnaphtalin, 2-Ethylnaphtalin oder 1-Chlornaphtalin.

Wenn Substituenten gemeinsam für eine $C_3$ oder $C_4$-Alkylenbrücke stehen, so werden zusammen mit dem Ringsystem, an welches sie gebunden sind, mehrkernige Systeme gebildet wie etwa 2,3-Tetramethylenthiophen, 2,3-Trimethylenthiophen, 2,3-Tetramethylenfuran, 3,4-Tetramethylenpyridin oder

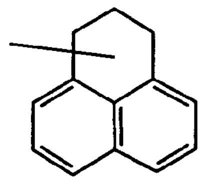

.

Unter N-Oxiden der Verbindung der Formel I sind Verbindungen zu verstehen, die eine Gruppe der Formel

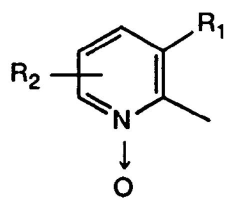

enthalten.

Die Erfindung umfaßt ebenfalls die Salze, die die Verbindungen der Formel I und II mit Aminen, Alkali- und Erdalkalimetallbasen oder quaternären Ammoniumbasen bilden können. Ebenso kann Salzbildung durch Anlagerung einer starken Säure an den Pyrimidinteil der Verbindung der Formel I erfolgen. Geeignete Säuren hierfür sind Salzsäure, Bromwasserstoffsäure, Schwefelsäure oder Salpetersäure.

Unter Alkali- und Erdalkalimetallhydroxiden als Salzbildner sind die Hydroxide von Lithium, Natrium, Kalium, Magnesium oder Calcium hervorzuheben, insbesondere aber die von Natrium oder Kalium.

Als Beispiele für zur Ammonium-Kationenbildung geeignete Amine kommen sowohl Ammoniak wie auch primäre, sekundäre und teriäre $C_1$-$C_4$-Alkylamin,
$C_1$-$C_4$-Hydroxyalkylamine und $C_{2-4}$-Alkoxyalkylamine in Betracht, beispielsweise Methylamin, Ethylamin, n-Propylamin, iso-Propylamin, die vier isomeren Butylamine, n-Amylamin, iso-Amylamin, Hexylamin, Heptylamin, Octylamin, Nonylamin, Decylamin, Pentadecylamin, Hexadecylamin, Heptadecylamin, Octadecylamin, Methyl-ethylamin, Methyl-iso-propylamin, Methyl-hexylamin, Methyl-nonylamin, Methyl-pentadecylamin, Methyl-octadecylamin, Ethyl-butylamin, Ethyl-heptylamin, Ethyl-octylamin, Hexyl-heptylamin, Hexyl-octylamin, Dimethylamin, Diethylamin, Di-n-propylamin, Di-iso-propylamin, Di-n-butylamin, Di-n-amylamin, Di-iso-amylamin, Dihexylamin, Di-heptylamin, Dioctylamin, Ethanolamin, n-Propanolamin, iso-Propanolamin, N,N-Di-ethanolamin, N-Ethylpropanolamin, N-Butylethanolamin, Allylamin, n-Butenyl-2-amin, n-Pentenyl-2-amin, 2,3-Dimethylbutenyl-2-amin, Di-butenyl-2-amin, n-Hexenyl-2-amin, Propylendiamin, Diethanolamin, Trimethylamin, Triethylamin, Tri-n-propylamin, Tri-iso-propylamin, Tri-n-butylamin, Tri-iso-butylamin, Tri-sek.-butylamin, Tri-n-amylamin, Methoxyethylamin und Ethoxyethylamin; heterocyclische Amine wie z.B. Pyridin, Chinolin, iso-Chinolin, Morpholin, Piperidin, Pyrrolidin, Indolin, Chinuclidin und Azepin; primäre Arylamine wie z B. aniline, Methoxyaniline, Ethoxyaniline, o,m,p-Toluidine, Phenylendiamine, Benzidine, Naphthylamine und o,m,p-Chloraniline; insbesondere aber Triethylamin, iso-Propylamin und Di-iso-propylamin.

Beispiele für quarternäre Ammoniumbasen sind im allgemeinen die Kationen von Halogenammoniumsalzen, z.B. das Tetramethylammoniumkation, das Trimethylbenzylammoniumkation, das Triethylbenzylammoniumkation, das Tetraethylammoniumkation, das Trimethylethylammoniumkation, aber auch das Ammoniumkation.

Für die Verwendung im erfindungsgemäßen Mittel bevorzugte Verbindungen der Formel I sind solche, worin $R_1$ $-NR_6R_7$ ist, und insbesondere solche, worin $R_6$ $C_1$-$C_4$-Alkyl und $R_7$ $C_1$-$C_4$-Alkylsulfonyl ist.

Des weiteren sind solche Verbindungen bevorzugt, worin $R_2$ Wasserstoff ist.

Geeignet sind auch jene Verbindungen, worin $R_3$ Wasserstoff ist.

Eine Gruppe besonders bevorzugter Verbindungen ist dadurch gekennzeichnet, daß $A_1$ eine Gruppe der Formel

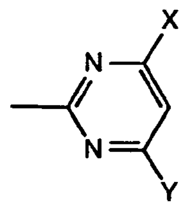

ist, worin X und Y unabhänig voneinander Wasserstoff, $C_1$-$C_3$-Alkyl oder $C_1$-$C_3$-Alkoxy sind.

Für die Verwendung im erfindungsgemäßen Mittel bevorzugte Verbindungen der Formel II sind dadurch gekennzeichnet, daß $A_2$ eine Gruppe der Formel

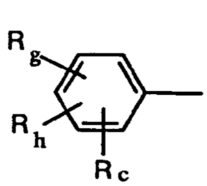 , oder 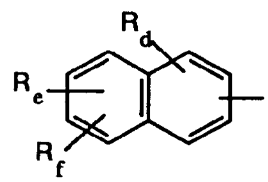

ist,
worin
$R_g$ und $R_h$ unabhängig voneinander für Wasserstoff, Halogen, $C_1$-$C_4$-Alkyl, Trifluormethyl, Methoxy, Methylthio oder $COOR_j$ stehen, wobei
$R_c$ Wasserstoff, Halogen, $C_1$-$C_4$-Alkyl oder Methoxy,
$R_d$ Wasserstoff, Halogen, Nitro, $C_1$-$C_4$-Alkyl, $C_1$-$C_4$-Alkoxy, $C_1$-$C_4$-Alkylthio, $C_1$-$C_4$-Alkylsulfinyl, $C_1$-$C_4$-Alkylsulfonyl, $-COOR_j$ oder $-CONR_kR_m$,
$R_e$ Wasserstoff, Halogen, $C_1$-$C_4$-Alkyl, $-COOR_j$, Trifluormethyl oder Methoxy ist, oder $R_d$ und $R_e$ gemeinsam eine C3 oder $C_4$-Alkylenbrücke bilden,
$R_f$ Wasserstoff, Halogen oder $C_1$-$C_4$-Alkyl ist,
$R_j$, $R_k$ und $R_m$ unabhängig voneinander Wasserstoff oder $C_1$-$C_4$-Alkyl sind, und
$R_k$ und $R_m$ gemeinsam eine $C_4$-$C_6$-Alkylenbrücke oder eine durch Sauerstoff, NH oder $-N(C_1$-$C_4$-Alkyl)- unterbrochene $C_4$-$C_6$-Alkylenbrücke bilden.

Hiervon sind solche besonders bevorzugt, worin $R_c$, $R_d$, $R_e$, $R_g$ und $R_h$ unabhängig voneinander Wasserstoff, $C_1$-$C_4$-Alkyl oder Methoxy sind.

Weitere besonders geeignete Gruppen von Verbindungen der Formel II sind solche, worin $R_{15}$ und $R_{16}$ Wasserstoff sind; oder $R_{13}$ und $R_{14}$ Wasserstoff sind; oder die Sulfamoylgruppe die 4-Stellung am Phenylring einnimmt.

Geeignet sind auch diejenigen Verbindungen der Formel II, worin $R_{13}$, $R_{14}$ und $R_{15}$ Wasserstoff sind, und die Sulfamoylgruppe die 4-Stellung am Phenylring einnimmt.

Besonders wertvolle Mittel gemäß vorliegender Erfindung zeichnen sich dadurch aus, daß sie als Verbindung der Formel I eine Verbindung der Formel Ia

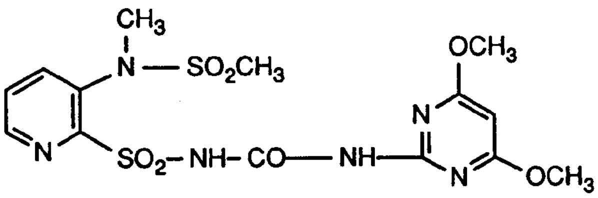

(Ia)

und als Verbindung der Formel II eine Verbindung der Formel IIa

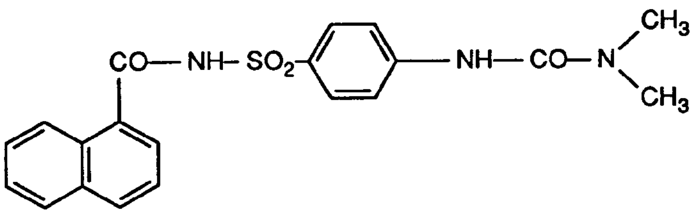

(IIa)

oder der Formel IIb

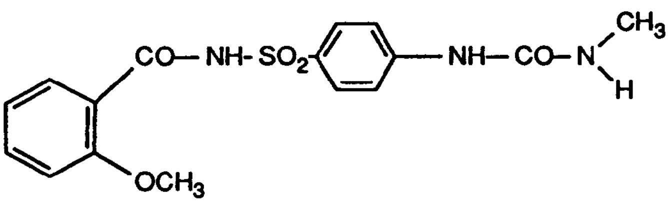

(IIb)

oder der Formel IIc

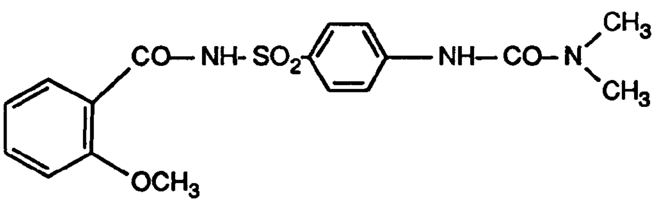

(IIc)

oder der Formel IId

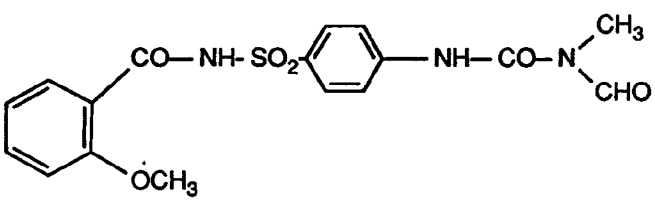

(IId)

oder der Formel IIe

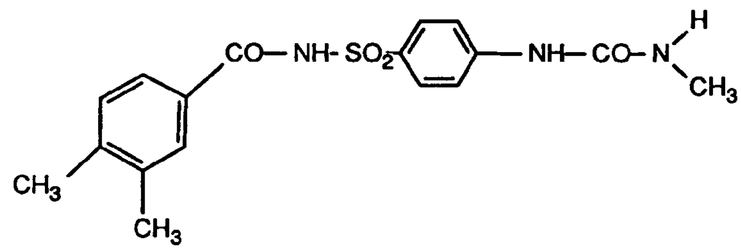

(IIe)

enthalten.

Die erfindungsgemäß verwendeten Pyridylsulfonylharnstoffe der Formel I und ihre Herstellung sind beispielsweise in der DE-A-40 00 503 beschrieben. Die für die erfindungsgemäßen Mittel verwendeten Sulfamoylphenylharnstoffe der Formel II und ihre Herstellung sind z.B. aus der EP-A-365 484 bekannt.

Die Erfindung betrifft auch ein Verfahren zum selektiven Bekämpfen von Unkräutern in Nutzpflanzenkulturen, welches darin besteht, daß man die Nutzpflanzen, deren Saatgut wie Samen oder Stecklinge oder deren Anbaufläche gleichzeitig oder unabhängig voneinander mit einer herbizid wirksamen Menge der Pyridylsulfonylharnstoffe der Formel I und einer herbizid-antagonistisch wirksamen Menge eines Sulfamoylphenylharnstoffes der Formel II behandelt.

Als Kulturpflanzen, welche gegen die schädigende Wirkung der oben erwähnten Herbizide der Formel I geschützt werden können, kommen insbesondere diejenigen in Betracht, die auf dem Nahrungs- oder Textilsektor von Bedeutung sind, beispielsweise Zuckerrohr und insbesondere Kulturhirse und Mais, sowie Reis und andere Getreidearten wie Weizen, Roggen, Gerste und Hafer.

Bei den zu bekämpfenden Unkräutern kann es sich sowohl um monokotyle wie um dikotyle Unkräuter handeln.

Als Kulturpflanzen oder Teile dieser Pflanzen kommen beispielsweise die vorstehend genannten in Betracht. Als Anbauflächen gelten die bereits mit den Kulturpflanzen bewachsenen oder mit dem Saatgut dieser Kulturpflanzen beschickten Bodenareale, wie auch die zur Bebauung mit diesen Kulturpflanzen bestimmten Böden.

Ein Safener oder Antidot der Formel II kann je nach Anwendungszweck zur Vorbehandlung des Saatgutes der Kulturpflanze (Beizung des Samens oder der Stecklinge) eingesetzt oder vor oder nach der Saat in den Boden gegeben werden. Es kann aber auch für sich allein oder zusammen mit dem Herbizid vor oder nach dem Auflaufen der Pflanzen appliziert werden. Die Behandlung der Pflanze oder des Saatgutes mit dem Safener kann daher grundsätzlich unabhängig vom Zeitpunkt der Applikation der phytotoxischen Chemikalie erfolgen. Die Behandlung der Pflanze kann jedoch auch durch gleichzeitige Applikation von phytotoxischer Chemikalie und Safener (Tankmischung) erfolgen. Die pre-emergente Behandlung schließt sowohl die Behandlung der Anbaufläche vor der Aussaat als auch die Behandlung der angesäten, aber noch nicht bewachsenen Anbauflächen ein.

Die zu applizierende Aufwandmenge Safener im Verhältnis zum Herbizid richtet sich weitgehend nach der Anwendungsart. Bei einer Feldbehandlung, welche entweder unter Verwendung einer Tankmischung mit einer Kombination von Safener und Herbizid oder durch getrennte Applikation von Safener und Herbizid erfolgt, liegt in der Regel ein Verhältnis von Safener zu Herbizid von 1:100 bis 1:1, bevorzugt 1:20 bis 1:1, und insbesondere 1:1, vor. Dagegen werden bei der Samenbeizung weit geringere Mengen Safener im Verhältnis zur Aufwandmenge an Herbizid pro Hektar Anbaufläche benötigt.

In der Regel werden bei der Feldbehandlung 0,001 bis 5,0 kg Safener/ha, vorzugsweise 0,005 bis 0,5 kg Safener/ha, appliziert.

Die Aufwandmengen an Herbizid liegt in der Regel zwischen 0,001 bis 2 kg/ha, vorzugsweise jedoch zwischen 0,001 bis 0,5 kg/ha.

Bei der Samenbeizung werden im allgemeinen 0,001 bis 10 g Safener/kg Samen, vorzugsweise 0,05 bis 2 g Safener/kg Samen, appliziert. Wird der Safener in flüssiger Form kurz vor der Aussaat unter Samenquellung appliziert, so werden zweckmäßigerweise Safener-Lösungen verwendet, welche den Wirkstoff in einer Konzentration von 1 bis 10000, vorzugsweise von 100 bis 1000 ppm, enthalten.

Zur Applikation werden die Verbindungen der Formel II oder Kombinationen von Verbindungen der Formel II mit den zu antagonisierenden Herbiziden zweckmäßigerweise zusammen mit den in der Formulierungstechnik üblichen Hilfsmitteln eingesetzt und werden daher z.B. zu Emulsionskonzentraten, streichfähigen Pasten, direkt versprühbaren oder verdünnbaren Lösungen, verdünnten Emulsionen, Spritzpulvern, löslichen Pulvern, Stäubemitteln, Granulaten, auch Verkapselungen in z.B. polymeren Stoffen, in bekannter Weise verarbeitet. Die Anwendungsverfahren wie Versprühen, Vernebeln, Verstäuben, Verstreuen, Bestreichen oder Gießen werden gleich wie die Art der zu verwendenden Mittel den angestrebten Zielen und den gegebenen Verhältnissen entsprechend gewählt.

Die Formulierungen, d.h. die den Wirkstoff der Formel II oder eine Kombination von Wirkstoff der Formel II mit zu antagonisierendem Herbizid der Formel I und gegebenenfalls einen festen oder flüssigen Zusatzstoff enthaltenden Mittel, Zubereitungen oder Zusammensetzungen werden in bekannter Weise hergestellt, z.B. durch inniges Vermischen und/oder Vermahlen der Wirkstoffe mit Streckmitteln, wie z.B. mit Lösungsmitteln, festen Trägerstoffen, und gegebenenfalls oberflächenaktiven Verbindungen (Tensiden).

Als Lösungsmittel können in Frage kommen: Aromatische Kohlenwasserstoffe, bevorzugt die Fraktionen $C_8$ bis $C_{12}$, wie z.B. Xylolgemische oder substituierte Naphthaline, Phthalsäureester wie Dibutyl- oder Dioctylphthalat, aliphatische Kohlenwasserstoffe wie Cyclohexan oder Paraffine, Alkohole und Glykole, sowie deren Ether und Ester wie Ethanol, Ethylenglykol, Ethylenglykolmonomethyl- oder ethylether, Ketone wie Cyclohexanon, stark polare Lösungsmittel wie N-Methyl-2-pyrrolidon, Dimethylsulfoxid oder Dimethylformamid, sowie gegebenenfalls epoxidierte Pflanzenöle wie epoxidiertes Kokosnußöl oder Sojaöl; oder Wasser.

Als feste Trägerstoffe, z.B. für Stäubemittel und dispergierbare Pulver, werden in der Regel natürliche Gesteinsmehle verwendet, wie Calcit, Talkum, Kaolin, Montmorillonit oder Attapulgit. Zur Verbesserung der physikalischen Eigenschaften können auch hochdisperse Kieselsäure oder hochdisperse saugfähige Polymerisate zugesetzt werden. Als gekörnte, adsorptive Granulatträger kommen poröse Typen wie z.B. Bimsstein, Ziegelbruch, Sepiolit oder Bentonit, als nicht sorptive Trägermaterialien z.B. Calcit oder Sand in Frage. Darüberhinaus kann eine Vielzahl von vorgranulierten Materialien anorganischer oder organischer Natur wie insbesondere Dolomit oder zerkleinerte Pflanzenrückstände verwendet werden.

Als oberflächenaktive Verbindungen kommen je nach Art des zu formulierenden Wirkstoffs der Formel II und gegebenenfalls auch dem zu antagonisierenden Herbizid der Formel I nichtionogene, kation- und/oder anionaktive Tenside mit guten Emulgier-, Dispergier- und Netzeigenschaften in Betracht. Unter Tensiden sind auch Tensidgemische zu verstehen.

Geeignete anionische Tenside können sowohl sog. wasserlösliche Seifen wie wasserlösliche synthetische oberflächenaktive Verbindungen sein.

Als Seifen seien die Alkali-, Erdalkali- oder gegebenenfalls substituierten Ammoniumsalze von höheren Fettsäuren ($C_{10}$-$C_{22}$), wie z.B. die Na- oder K-Salze der Oel- oder Stearinsäure, oder von natürlichen Fettsäuregemischen, die z.B. aus Kokosnuß- oder Talgöl gewonnen werden können, genannt. Ferner sind auch die Fettsäure-methyltaurinsalze zu erwähnen.

Häufiger werden jedoch sogenannte synthetische Tenside verwendet, insbesondere Fettsulfonate, Fettsulfate, sulfonierte Benzimidazolderivate oder Alkylarylsulfonate.

Die Fettsulfonate oder -sulfate liegen in der Regel als Alkali-, Erdalkali- oder gegebenenfalls substituierte Ammoniumsalze vor und weisen einen Alkylgruppe mit 8 bis 22 C-Atomen auf, wobei Alkyl auch den Alkylteil von Acylgruppen einschließt, z.B. das Na- oder Ca-Salz der Ligninsulfonsäure, des Dodecylschwefelsäureesters oder eines aus natürlichen Fettsäuren hergestellten Fettalkoholsulfatgemisches. Hierher gehören auch die Salze der Schwefelsäureester und Sulfonsäuren von Fettalkohol-Ethylenoxid-Addukten.

Die sulfonierten Benzimidazolderivate enthalten vorzugsweise 2-Sulfonsäuregruppen und einen Fettsäuregruppe mit 8 bis 22 C-Atomen. Alkylarylsulfonate sind z.B. die Na-, Ca- oder Triethanolaminsalze der Dodecylbenzolsulfonsäure, der Dibutylnaphthalinsulfonsäure, oder eines Naphthalinsulfonsäure-Formaldehydkondensationsproduktes.

Ferner kommen auch entsprechende Phosphate wie z.B. Salze des Phosphorsäureesters eines p-Nonylphenol-(4-14)-Ethylenoxid-Adduktes oder Phospholipide in Frage.

Als nichtionische Tenside kommen in erster Linie Polyglykoletherderivate von aliphatischen oder cycloaliphatischen Alkoholen, gesättigten oder ungesättigten Fettsäuren und Alkylphenolen in Frage, die 3 bis 30 Glykolethergruppen und 8 bis 20 Kohlenstoffatome im (aliphatischen) Kohlenwasserstoff und 6 bis 18 Kohlenstoffatome im Alkyl der Alkylphenole enthalten können.

Weitere geeignete nichtionische Tenside sind die wasserlöslichen, 20 bis 250 Ethylenglykolethergruppen und 10 bis 100 Propylenglykolethergruppen enthaltenden Polyethylenoxidaddukte and Polypropylenglykol, Ethylendiaminopolypropylenglykol und Alkylpolypropylenglykol mit 1 bis 10 Kohlenstoffatomen in der Alkylkette. Die genannten Verbindungen enthalten üblicherweise pro Propylenglykol-Einheit 1 bis 5 Ethylenglykoleinheiten.

Als Beispiele nichtionischer Tenside seien Nonylphenolpolyethoxyethanole, Ricinusölpolyglykolether, Polypropylen-Polyethylenoxidaddukte, Tributylphenoxypolyethoxyethanol, Polyethylenglykol und Octylphenoxypolyethoxyethanol erwähnt.

Ferner kommen auch Fettsäureester von Polyoxyethylensorbitan wie das Polyoxyethylensorbitan-trioleat in Betracht.

Bei den kationischen Tensiden handelt es sich vor allem um quartäre Ammoniumsalze, welche als N-Substituenten mindestens eine Alkylgruppe mit 8 bis 22 C-Atomen enthalten und als weitere Substituenten niedrige, gegebenenfalls halogenierte Alkyl-, Benzyl- oder niedrige Hydroxyalkylgruppen aufweisen. Die Salze liegen vorzugsweise als Halogenide, Methylsulfate oder Ethylsulfate vor, z.B. das Stearyltrimethylammoniumchlorid oder das Benzyldi-(2-chlorethyl)-ethylammoniumbromid.

Die in der Formulierungstechnik gebräuchlichen Tenside sind u.a in folgenden Publikationen beschrieben: "Mc Cutcheon's Detergents and Emulsifiers Annual" MC Publishing Corp., Ridgewood New Jersey, 1981. Stache, H., "Tensid-Taschenbuch", Carl Hanser Verlag, München/Wien, 1981.

Die agrochemischen Zubereitungen enthalten in der Regel 0,1 bis 99 Gewichtsprozent, insbesonder 0,1 bis 95 Gew.-%, Wirkstoff der Formel II oder Wirkstoffgemisch Antidot/Herbizid, 1 bis 99,9 Gew.-%, insbesonder 5 bis 99,8 Gew.-%, eines festen oder flüssigen Zusatzstoffes und 0 bis 25 Gew.-%, insbesondere 0,1 bis 25 Gew.-%, eines Tensides.

Während als Handelsware eher konzentrierte Mittel bevorzugt werden, verwendet der Endverbraucher in der Regel verdünnte Mittel.

Die Mittel können auch weitere Zusätze wie Stabilisatoren, Entschäumer, Viskositätsregulatoren, Bindemittel, Haftmittel sowie Dünger oder andere Wirkstoffe zur Erzielung spezieller Effekte enthalten.

Für die Verwendung von Verbindungen der Formel II oder sie enthaltender Mittel zum Schützen von Kulturpflanzen gegen schädigende Wirkungen von Herbiziden der Formel I kommen verschiedene Methoden und Techniken in Betracht, wie beispielsweise die folgenden:

i) Samenbeizung

a) Beizung der Samen mit einem als Spritzpulver formulierten Wirkstoff der Formel II durch Schütteln in einem Gefäß bis zur gleichmäßigen Verteilung auf der Samenoberfläche (Trockenbeizung). Man verwendet dabei etwa 1 bis 500 g Wirkstoff der Formel II (4 g bis 2 kg Spritzpulver) pro 100 kg Saatgut.

b) Beizung der Samen mit einem Emulsionskonzentrat des Wirkstoffs der Formel II nach der Methode a) (Naßbeizung).

c) Beizung durch Tauchen des Saatguts in eine Brühe mit 100-1000 ppm Wirkstoff der Formel II während 1 bis 72 Stunden und gegebenenfalls nachfolgendes Trocknen der Samen (Tauchbeizung).

Die Beizung des Saatguts oder die Behandlung des angekeimten Sämlings sind naturgemäß die bevorzugten Methoden der Applikation, weil die Wirkstoffbehandlung vollständig auf die Zielkultur gerichtet ist. Man verwendet in der Regel 1 bis 1000 g Antidot, vorzugsweise 5 bis 250 g Antidot, pro 100 kg Saatgut, wobei man je nach Methodik, die auch den Zusatz anderer Wirkstoffe oder Mikronährstoffe ermöglicht, von den angegebenen Grenzkonzentrationen nach oben oder unten abweichen kann (Wiederholungsbeize).

ii) Applikation aus Tankmischung

Eine flüssige Aufarbeitung eines Gemisches von Antidot und Herbizid (gegenseitiges Mengenverhältnis zwischen 10:1 und 1:100) wird verwendet, wobei die Aufwandmenge an Herbizid 0,01 bis 5,0 kg pro Hektar beträgt. Solche Tankmischung wird vor oder nach der Aussaat appliziert.

iii) Applikation in der Saatfurche

Das Antidot wird als Emulsionskonzentrat, Spritzpulver oder als Granulat in die offene besäte Saatfurche eingebracht und hierauf wird nach dem Decken der Saatfurche in normaler Weise das Herbizid im Vorauflaufverfahren appliziert.

iv) Kontrollierte Wirkstoffabgabe

Der Wirkstoff der Formel II wird in Lösung auf mineralische Granulatträger oder polymerisierte Granulate (Harnstoff/Formaldehyd) aufgezogen und getrocknet. Gegebenenfalls kann ein Überzug aufgebracht werden (Umhüllungsgranulate), der es erlaubt, den Wirkstoff über einen bestimmten Zeitraum dosiert abzugeben.

Die Wirkung der erfindungsgemäßen Mittel wird durch die folgenden Beispiele näher erläutert.

Formulierungsbeispiele für Wirkstoffe der Formel II oder Mischungen derselben mit einem Herbizid der Formel I (% = Gewichtsprozent)

| 1. Emulsions-Konzentrate | a) | b) | c) |
|---|---|---|---|
| Wirkstoffmischung | 25 % | 40 % | 50 % |
| Ca-Dodecylbenzolsulfonat | 5 % | 8 % | 6 % |
| Ricinusöl-polyethylenglykolether (36 Mol EO) | 5 % | - | - |
| Tributylphenol-plyethylenglykolether (30 Mol EO) | - | 12 % | 4 % |
| Cyclohexanon | - | 15 % | 20 % |
| Xylolgemisch | 65 % | 25 % | 20 % |

Aus solchen Konzentrationen können durch Verdünnung mit Wasser Emulsionen jeder gewünschten Konzentration hergestellt werden.

| 2. Lösungen | a) | b) | c) | d) |
|---|---|---|---|---|
| Wirkstoffmischung | 80 % | 10 % | 5 % | 95 % |
| Ethylenglykol-monomethyl-ether | 20 % | - | - | - |
| Polyethylenglykol MG 400 | - | 70 % | - | - |
| N-Methyl-2-pyrrolidon | - | 20 % | - | - |
| Epoxidiertes Kokosnußöl | - | - | 1 % | 5 % |
| Benzin (Siedegrenzen 160-190°) | - | - | 94 % | - |

Die Lösungen sind zur Anwendung in Form kleinster Tropfen geeignet.

| 3. Granulate | a) | b) |
|---|---|---|
| Wirkstoffmischung | 5 % | 10 % |
| Kaolin | 94 % | - |
| Hochdisperse Kieselsäure | 1 % | - |
| Attapulgit | - | 90 % |

Der Wirkstoff wird in Methylenchlorid gelöst, auf den Träger aufgesprüht und das Lösungsmittel anschließend im Vakuum abgedampft.

| 4. Stäubemittel | a) | b) |
|---|---|---|
| Wirkstoffmischung | 2 % | 5 % |
| Hochdisperse Kieselsäure | 1 % | 5 % |
| Talkum | 97 % | - |
| Kaolin | - | 90 % |

Durch inniges Vermischen der Trägerstoffe mit dem Wirkstoff erhält man gebrauchsfertige Stäubemittel.

| 5. Spritzpulver | a) | b) | c) |
|---|---|---|---|
| Wirkstoffmischung | 25 % | 50 % | 75 % |
| Na-Ligninsulfonat | 5 % | 5 % | - |
| Na-Laurylsulfat | 3 % | - | 5 % |
| Na-Diisobutylnaphthalinsulfonat | - | 6 % | 10 % |
| Octylphenolpolyethylenglykolether (7-8 Mole EO) | - | 2 % | - |
| Hochdisperse Kieselsäure | 5 % | 10 % | 10 % |
| Kaolin | 62 % | 27 % | - |

Der Wirkstoff wird mit den Zusatzstoffen gut vermischt und in einer geeigneten Mühle gut vermahlen. Man erhält Spritzpulver, die sich mit Wasser zu Suspensionen jeder gewünschten Konzentration verdünnen lassen.

| 6. Emulsions-Konzentrate | |
|---|---|
| Wirkstoffmischung | 10 % |
| Octylphenolpolyethylenglykolether (4-5 Mol EO) | 3 % |
| Ca-Dodecylbenzolsulfonat | 3 % |
| Ricinusölpolyglykolether (35 Mol EO) | 4 % |
| Cyclohexanon | 30 % |
| Xylolgemisch | 50 % |

Aus diesem Konzentrat können durch Verdünnen mit Wasser Emulsionen jeder gewünschten Konzentration hergestellt werden.

| 7. Stäubemittel | a) | b) |
|---|---|---|
| Wirkstoffmischung | 5 % | 8 % |
| Talkum | 95 % | - |
| Kaolin | - | 92 % |

Man erhält anwendungsfertige Stäubemittel, indem der Wirkstoff mit den Trägerstoffen vermischt und auf einer geeigneten Mühle vermahlen wird.

8. Extruder-Granulate

| | |
|---|---|
| Wirkstoffmischung | 10 % |
| Na-Ligninsulfonat | 2 % |
| Carboxymethylcellulose | 1 % |
| Kaolin | 87 % |

Der Wirkstoff wird mit den Zusatzstoffen vermischt, vermahlen und mit Wasser angefeuchtet. Dieses Gemisch wird extrudiert und anschließend im Luftstrom getrocknet.

| 9. Umhüllungs-Granulate | |
|---|---|
| Wirkstoffmischung | 3 % |
| Polyethylenglykol (MG 200) | 3 % |
| Kaolin | 94 % |

Der fein gemahlene Wirkstoff wird in einem Mischer auf das mit Polyethylenglykol angefeuchtete Kaolin gleichmäßig aufgetragen. Auf diese Weise erhält man staubfieie Umhüllungs-Granulate.

| 10. Suspensions-Konzentrate | |
|---|---|
| Wirkstoffmischung | 40 % |
| Ethylenglykol | 10 % |
| Nonylphenolpolyethylenglykolether (15 Mol EO) | 6 % |
| Na-Ligninsulfonat | 10 % |
| Carboxymethylcellulose | 1 % |
| 37%ige wäßrige Formaldehyd-Lösung | 0,2 % |
| Silikonöl in Form einer 75%igen wäßrigen Emulsion | 0,8 % |
| Wasser | 32 % |

Der feingemahlene Wirkstoff wird mit den Zusatzstoffen innig vermischt. Man erhält so ein Suspensions-Konzentrat, aus welchem durch Verdünnen mit Wasser Suspensionen jeder gewünschten Konzentration hergestellt werden können.

Beispiel B1: Post-emergente phytotoxische Wirkungen der Herbizide der Formel I und der Mischungen Herbizid mit Safener der Formel II auf Mais

Unter Gewächshausbedingungen wird Mais in Kuntstofftöpfen bis zum 2,5-Blattstadium angezogen. In diesem Stadium wird ein Herbizid alleine sowie auch die Mischung des Herbizides mit Safenern auf die Testpflanzen appliziert. Die Applikation erfolgt als wäßrige Suspension der Prüfsubstanzen mit 500 l Wasser/ha. Die Aufwandmengen für das Herbizid betragen 125/60/30/15 g/ha, die Aufwandmengen für die Safener 60 g/ha 21 Tage nach Applikation wird mit einer Prozentskala ausgewertet. 100 % bedeutet Testpflanze ist abgestorben, 0 % bedeutet keine phytotoxische Wirkung. Es wurden die in Tabelle 1 dargestellten Resultate erhalten. Die Resultate zeigen, daß die eingesetzten Safener die durch das Herbizid auf Mais verursachte Schädigung deutlich reduzieren können.

Tabelle 1:

| | | Herbiziddosierung g/ha | | | | |
|---|---|---|---|---|---|---|
| Herbizid | Safener, g/ha | 125 | 60 | 30 | 15 | 8 |
| Ia | - | 85 | 70 | 60 | 50 | 30 |
| Ia | IIa, 60 | 40 | 30 | 25 | 10 | 0 |
| Ia | IIb, 60 | 15 | 0 | 0 | 0 | 0 |
| Ia | IIc, 60 | 20 | 0 | 0 | 0 | 0 |
| Ia | IId, 60 | 0 | 0 | 0 | 0 | 0 |

Beispiel B2: Verwendung einer Mischung Herbizid der Formel I mit Safener der Formel II zur Samenbeizung bei Mais

Maissaatgut wird mit einem Safener angebeizt entsprechend einer Dosierung von 1 g/kg Saatgut. Anschließend wird der Mais unter Gewächshausbedingungen in Kunststofftöpfen bis zum 2,5-Blattstadium angezogen. Parallel zum behandelten Mais wird unbehandelter Mais bis zum selben Stadium kultiviert. In diesem Stadium wird das Herbizid auf behandelte und unbehandelte Testpflanzen appliziert. Die Applikation erfolgt als wäßrige Suspension des Herbizids mit 500 l Wasser/ha. Die Aufwandmenge für das Herbizid beträgt 125, 60, 30 g/ha, die Aufwandmenge für den Saatbeizsafener beträgt 1 g/kg Saatgut. 14 Tage nach Applikation wird mit einer Prozentskala ausgewertet. 100 % bedeutet Testpflanze ist abgestorben, 0 % bedeutet keine phytotoxische Wirkung. Es wurden die in Tabelle 2 dargestellten Resultate erhalten. Die Resultate zeigen, daß der Safener als Saatbeizmittel die durch das Herbizid postemergent verursachte Schädigung deutlich reduziert. Aehnliche Resultate werden erhalten, wenn das Herbizid preemergent appliziert wird.

Tabelle 2:

| Herbizid | Safener, g/ha | 125 | 60 | 30 |
|---|---|---|---|---|
| Ia | - | 90 | 70 | 50 |
| Ia | IIa, 1 | 10 | 0 | 0 |

**Patentansprüche**

1. Mittel zur selektiven Kontrolle von Unkräutern in Kulturen von Nutzpflanzen, dadurch gekennzeichnet, daß es neben inerten Träger- und Zusatzstoffen als wirksame Komponente eine Mischung aus

a) einer herbizid wirksamen Menge eines Pyridylsulfonylharnstoffes der Formel I

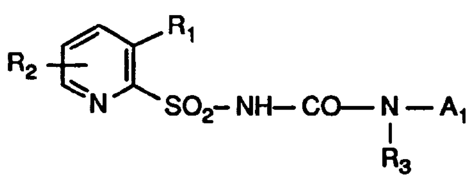

(I),

worin

$R_1$ $Si(CH_3)_3$, $-OSO_2NR_4R_5$, $-NR_6R_7$ oder Jod,

$R_2$ Wasserstoff, $C_1$-$C_3$-Alkyl, $C_1$-$C_3$-Haloalkyl, Halogen, $NO_2$, CN, $C_1$-$C_3$-Alkoxy, $C_1$-$C_3$-Haloalkoxy, $C_1$-$C_3$-Alkylthio, $C_1$-$C_3$-Alkoxy-$C_1$-$C_3$-alkyl, $C_1$-$C_3$-Alkoxycarbonyl, $C_1$-$C_3$-Alkylamino, Di($C_1$-$C_3$-alkyl)amino, $C_1$-$C_3$-Alkylsulfinyl, $C_1$-$C_3$-Alkylsulfonyl, $SO_2NR_8R_9$ oder $C(O)NR_5R_9$ ist,

$R_5$, $R_9$ unabhängig voneinander Wasserstoff, $C_1$-$C_3$-Alkyl, $C_3$- oder $C_4$-Alkenyl, Propargyl, oder zusammen $-(CH_2)_4-$, $-(CH_2)_5-$ oder $-CH_2CH_2OCH_2CH_2-$ sind,

$R_3$ Wasserstoff oder $CH_3$,

$R_4$ Wasserstoff, $C_1$-$C_3$-Alkyl, $C_3$-$C_4$-Alkenyl, $C_1$-$C_3$-Alkoxy oder Propargyl und

$R_5$ Wasserstoff, $C_1$-$C_3$-Alkyl, $C_3$-$C_4$-Alkenyl oder Propargyl ist, oder

$R_4$ und $R_5$ zusammen $-(CH_2)_4-$, $-(CH_2)_5-$ oder $-CH_2CH_2OCH_2CH_2-$ sind,

$R_5$ Wasserstoff, $C_1$-$C_4$-Alkyl, $C_1$-$C_4$-Alkylsulfonyl, Phenylsulfonyl, wobei die Phenylgruppe durch Halogen, $C_1$-$C_4$-Alkyl und $C_1$-$C_4$-Alkoxy substituiert sein kann, $C_3$- oder $C_4$-Alkenyl oder $C_3$- oder $C_4$-Alkinyl,

$R_7$ $C_1$-$C_4$-Alkylsulfonyl oder Phenylsulfonyl, wobei die Phenylgruppe durch Halogen, $C_1$-$C_4$-Alkyl und $C_1$-$C_4$-Alkoxy substituiert sein kann,

$A_1$ eine Gruppe der Formel

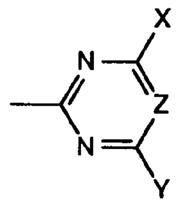 , 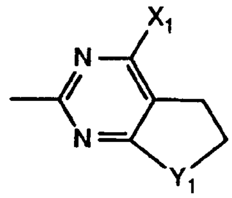 , 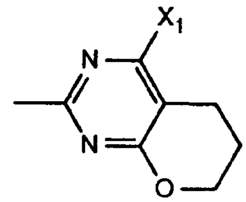 , 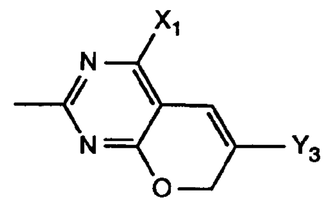

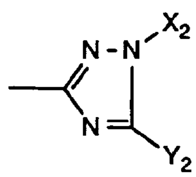 , 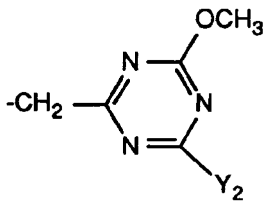 , 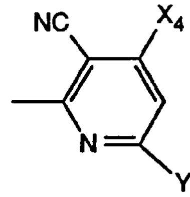 oder 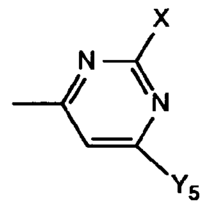 ,

X Wasserstoff, Halogen, $C_1$-$C_3$-Alkyl, $C_1$-$C_3$-Alkoxy, wobei die beiden letztgenannten Gruppen ein- oder mehrfach durch Halogen oder einfach durch $C_1$-$C_3$-Alkoxy substituiert sein können,
Y Wasserstoff, $C_1$-$C_3$-Alkyl, $C_1$-$C_3$-Alkoxy oder $C_1$-$C_3$-Alkylthio, wobei die drei letztgenannten Gruppen ein- oder mehrfach durch Halogen oder ein- oder zweifach durch $C_1$-$C_3$-Alkoxy oder $C_1$-$C_3$-Alkylthio substituiert sein können, ferner eine Gruppe der Formel $NR_{10}R_{11}$, $C_3$-$C_6$-Cycloalkyl, $C_2$-$C_4$-Alkenyl, $C_2$-$C_4$-Alkinyl, $C_3$- oder $C_4$-Alkenyloxy oder $C_3$- oder $C_4$-Alkinyloxy,
Z CH oder N ist,
$R_{10}$ und $R_{11}$ unabhängig voneinander Wasserstoff, $C_1$-$C_3$-Alkyl oder $C_3$ oder $C_4$-Alkenyl sind,
$X_1$ $CH_3$, $OCH_3$, $OC_2H_5$ oder $OCF_2H$,
$Y_1$ -O- oder $-CH_2-$,
$X_2$ $CH_3$, $C_2H_5$ oder $CH_2CF_3$,
$Y_2$ $OCH_3$, $OC_2H_5$, $SCH_3$, $SC_2H_5$, $CH_3$ oder $C_2H_5$,
$X_3$ $CH_3$ oder $OCH_3$,
$Y_3$ Wasserstoff oder $CH_3$,
$X_4$ $CH_3$, $OCH_3$, $OC_2H_5$, $CH_2OCH_3$ oder Chlor,
$Y_4$ $CH_3$, $OCH_3$, $OC_2H_5$ oder Chlor und
$Y_5$ $CH_3$, $C_2H_5$, $OCH_3$ oder Chlor ist,
oder einem N-Oxid oder einem Salz der Verbindung der Formel I,
und
b) einer herbizid-antagonistisch wirksamen Menge eines Sulfamoylphenylharnstoffes der Formel II

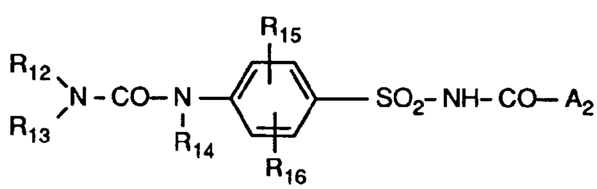 (II),

worin
$A_2$ eine Gruppe

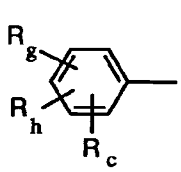 , 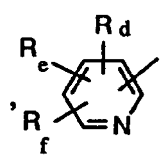 , 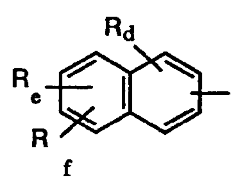 , 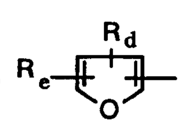 oder 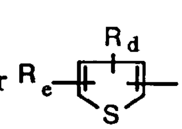

ist,
$R_{12}$ und $R_{13}$ unabhängig voneinander für Wasserstoff, $C_1$-$C_8$-Alkyl, $C_3$-$C_8$-Cycloalkyl, $C_3$-$C_6$-Alkenyl, $C_3$-$C_6$-Alkinyl,

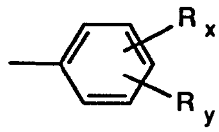

oder durch $C_1$-$C_4$-Alkoxy oder

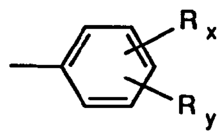

substituiertes $C_1$-$C_4$-Alkyl, oder
$R_{12}$ und $R_{13}$ gemeinsam für eine $C_4$-$C_6$-Alkylenbrücke oder eine durch Sauerstoff, Schwefel, SO, $SO_2$, NH oder -N($C_1$-$C_4$-Alkyl)- unterbrochene $C_4$-$C_6$-Alkylenbrücke stehen,
$R_{14}$ Wasserstoff oder $C_1$-$C_4$-Alkyl ist,
$R_{15}$ und $R_{16}$ unabhängig voneinander für Wasserstoff, Halogen, Cyan, Nitro, Trifluormethyl, $C_1$-$C_4$-Alkyl, $C_1$-$C_4$-Alkoxy, $C_1$-$C_4$-Alkylthio, $C_1$-$C_4$-Alkylsulfinyl, $C_1$-$C_4$-Alkylsulfonyl, -$COOR_j$, $CONR_kR_m$, -$COR_n$, $SO_2NR_kR_m$ oder -$OSO_2$-$C_1$-$C_4$-Alkyl, oder
$R_{15}$ und $R_{16}$ gemeinsam für eine $C_3$ oder $C_4$-Alkylenbrücke, die durch Halogen oder $C_1$-$C_4$-Alkyl substituiert sein kann, oder eine $C_3$-$C_4$-Alkenylenbrücke, die durch Halogen oder $C_3$- oder $C_4$-Alkyl substituiert sein kann, oder eine Butadienylenbrücke, die durch Halogen oder $C_1$-$C_4$-Alkyl substituiert sein kann, und
$R_g$ und $R_h$ unabhängig voneinander für Wasserstoff, Halogen, $C_1$-$C_4$-Alkyl, Trifluormethyl, Methoxy, Methylthio oder -$COOR_j$ stehen, wobei
$R_c$ Wasserstoff, Halogen, $C_1$-$C_4$-Alkyl oder Methoxy,
$R_c$ Wasserstoff, Halogen, Nitro, $C_1$-$C_4$-Alkyl, $C_1$-$C_4$-Alkoxy, $C_1$-$C_4$-Alkylthio, $C_1$-$C_4$-Alkylsulfinyl, $C_1$-$C_4$-Alkylsulfonyl, -$COOR_j$ oder $CONR_kR_m$ ist,
$R_e$ Wasserstoff, Halogen, $C_1$-$C_4$-Halogen, $C_1$-$C_4$-Alkyl, $COOR_j$, Trifluormethyl oder Methoxy bedeuten oder $R_d$ und $R_e$ stehen gemeinsam für eine $C_3$-$C_4$-Alkylenbrücke,
$R_f$ Wasserstoff, Halogen oder $C_1$-$C_4$-Alkyl ist,
$R_x$ und $R_y$ unabhängig voneinander Wasserstoff, Halogen, $C_1$-$C_4$-Alkyl, $C_1$-$C_4$-Alkoxy, $C_1$-$C_4$-Alkylthio, -$COOR_{17}$, Trifluormethyl, Nitro oder Cyano,
$R_j$, $R_k$ und $R_m$ unabhängig voneinander Wasserstoff oder $C_1$-$C_4$-Alkyl ist,
$R_k$ und $R_m$ gemeinsam eine $C_4$-$C_6$-Alkylenbrücke oder eine durch Sauerstoff, NH oder -N($C_1$-$C_4$-Alkyl)- unterbrochene $C_4$-
$C_6$-Alkylenbrücke bilden;
$R_{17}$ Wasserstoff, $C_1$-$C_{10}$-Alkyl, $C_1$-$C_4$-Alkoxy-$C_1$-$C_4$-alkyl, $C_1$-$C_4$-Alkylthio-$C_1$-$C_4$-alkyl, Di-$C_1$-$C_4$-alkylamino-$C_1$-$C_4$-alkyl, Halogen-$C_1$-$C_8$-alkyl, $C_2$-$C_8$-Alkenyl, Halogen-$C_2$-$C_8$-alkenyl, $C_3$-$C_8$-Alkinyl, $C_3$-$C_7$-Cycloalkyl, Halogen-$C_3$-$C_7$-cycloalkyl, $C_1$-$C_8$-Alkylcarbonyl, Allylcarbonyl, $C_3$-$C_7$-Cycloalkylcarbonyl, Benzoyl, das unsubstituiert oder am Phenylring gleich oder verschieden bis zu dreifach durch Halogen, $C_1$-$C_4$-Alkyl, Halogen-$C_1$-$C_4$-alkyl, Halogen-$C_1$-$C_4$-alkoxy oder $C_1$-$C_4$-Alkoxy substituiert ist; oder Furoyl, Thienyl; oder $C_1$-$C_4$-Alkyl substituiert durch Phenyl, Halogenphenyl, $C_1$-$C_4$-Alkylphenyl, $C_1$-$C_4$-Alkoxyphenyl, Halogen-$C_1$-$C_4$-alkylphenyl, Halogen-$C_1$-$C_4$-alkoxyphenyl, $C_1$-$C_6$-Alkoxycarbonyl, $C_1$-$C_4$-Alkoxy-$C_1$-$C_8$-alkoxycarbonyl, $C_3$-$C_8$-Alkenyloxycarbonyl, $C_3$-$C_8$-Alkinyloxycarbonyl, $C_1$-$C_8$-Alkylthiocarbonyl, $C_3$-$C_8$-Alkenylthiocarbonyl, $C_3$-$C_8$-Alkinylthiocarbonyl, Carbamoyl, Mono-$C_1$-$C_4$-alkylaminocarbonyl, Di-$C_1$-$C_4$-alkylaminocarbonyl; oder Phenylaminocarbonyl, das unsubstituiert oder am Phenyl gleich oder verschieden bis zu dreifach durch Halogen, $C_1$-$C_4$-Alkyl, Halogen-$C_1$-$C_4$-alkyl, Halogen-$C_1$-$C_4$-alkoxy oder $C_1$-$C_4$-Alkoxy oder einfach durch Cyano oder Nitro substituiert ist, oder Dioxolan-2-yl, das unsubstituiert ist oder durch ein oder zwei $C_1$-$C_4$-Alkylgruppen substituiert ist, oder Dioxan-2-yl, das unsubstituiert ist oder durch ein oder zwei $C_1$-$C_4$-Alkylgruppen substituiert ist, oder $C_1$-$C_4$-Alkyl, das durch Cyano, Nitro, Carboxyl oder $C_1$-$C_8$-Alkylthio-
$C_1$-$C_8$-alkoxycarbonyl substituiert ist, und
$R_n$ $C_1$-$C_4$-Alkyl, Phenyl oder durch Halogen, $C_1$-$C_4$-Alkyl, Methoxy, Nitro oder Trifluormethyl substituiertes Phenyl ist,
oder einem Salz der Verbindung der Formel II, enthält.

2. Mittel nach Anspruch 1, worin in den Verbindungen der Formel I $R_1$ $-NR_6R_7$ ist.

3. Mittel nach Anspruch 2, worin $R_6$ $C_1$-$C_4$-Alkyl und $R_7$ $C_1$-$C_4$-Alkylsulfonyl ist.

4. Mittel nach Anspruch 1, worin in den Verbindungen der Formel I $R_2$ Wasserstoff ist.

5. Mittel nach Anspruch 1, worin in den Verbindungen der Formel I $R_3$ Wasserstoff ist.

6. Mittel nach Anspruch 1, worin in den Verbindungen der Formel I $A_1$ eine Gruppe der Formel

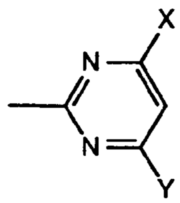

ist, worin X und Y unabhänig voneinander Wasserstoff, $C_1$-$C_3$-Alkyl oder $C_1$-$C_3$-Alkoxy sind.

7. Mittel nach Anspruch 1, worin in den Verbindungen der Formel II $A_2$ eine Gruppe der Formel

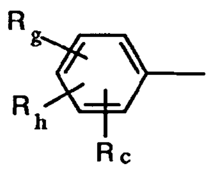 , oder 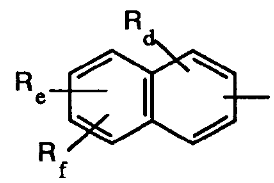 ,

worin
$R_g$ und $R_h$ unabhängig voneinander für Wasserstoff, Halogen, $C_1$-$C_4$-Alkyl, Trifluormethyl, Methoxy, Methylthio oder $COOR_j$ stehen, wobei
$R_c$ Wasserstoff, Halogen, $C_1$-$C_4$-Alkyl oder Methoxy,
$R_d$ Wasserstoff, Halogen, Nitro, $C_1$-$C_4$-Alkyl, $C_1$-$C_4$-Alkoxy, $C_1$-$C_4$-Alkylthio, $C_1$-$C_4$-Alkylsulfinyl, $C_1$-$C_4$-Alkylsulfonyl, $-COOR_j$ oder $-CONR_kR_m$,
$R_e$ Wasserstoff, Halogen, $C_1$-$C_4$-Alkyl, $-COOR_j$, Trifluormethyl oder Methoxy ist, oder $R_d$ und $R_e$ gemeinsam eine $C_3$ oder $C_4$-Alkylenbrücke bilden,
$R_f$ Wasserstoff, Halogen oder $C_1$-$C_4$-Alkyl ist,
$R_j$, $R_k$ und $R_m$ unabhängig voneinander Wasserstoff oder $C_1$-$C_4$-Alkyl sind, und
$R_k$ und $R_m$ gemeinsam eine $C_4$-$C_6$-Alkylenbrücke oder eine durch Sauerstoff, NH oder $-N(C_1$-$C_4$-Alkyl)- unterbrochene $C_4$-$C_6$-Alkylenbrücke bilden.

8. Mittel nach Anspruch 7, worin in den Verbindungen der Formel II $R_c$, $R_d$, $R_c$, $R_g$ und $R_h$ unabhängig voneinander Wasserstoff, $C_1$-$C_4$-Alkyl oder Methoxy sind.

9. Mittel nach Anspruch 1, worin in den Verbindungen der Formel II $R_{15}$ und $R_{16}$ Wasserstoff sind.

10. Mittel nach Anspruch 1, worin in den Verbindungen der Formel II $R_{13}$ und $R_{14}$ Wasserstoff sind.

11. Mittel nach Anspruch 1, worin in den Verbindungen der Formel II die Sulfamoylgruppe die 4-Stellung am Phenylring einnimmt.

12. Mittel nach Anspruch 1, worin in den Verbindungen der Formel II $R_{13}$, $R_{14}$ und $R_{15}$ Wasserstoff sind, und die Sulfamoylgruppe die 4-Stellung am Phenylring einnimmt.

13. Mittel nach Anspruch 1, das als Verbindung der Formel I eine Verbindung der Formel Ia

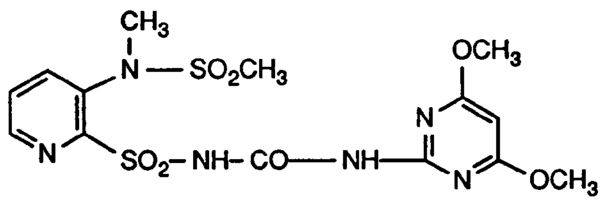

(Ia)

und als Verbindung der Formel II eine Verbindung der Formel IIa

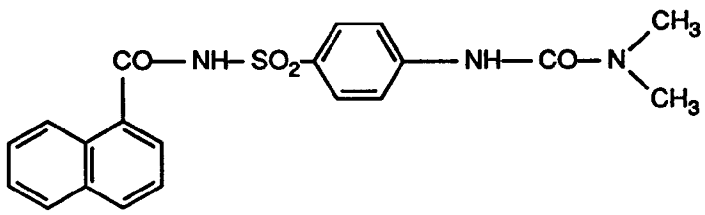

(IIa)

oder der Formel IIb

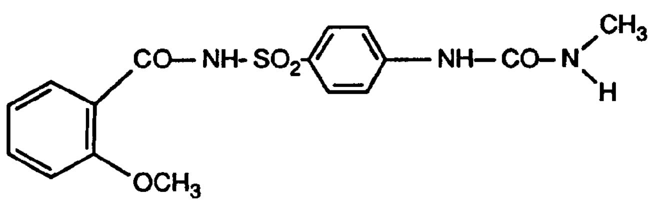

(IIb)

oder der Formel IIc

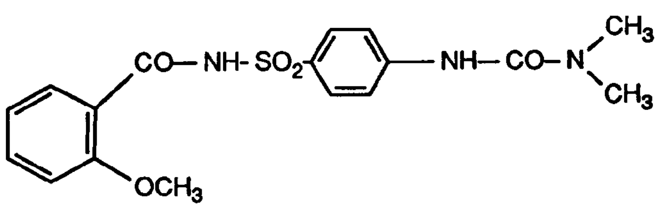

(IIc)

oder der Formel IId

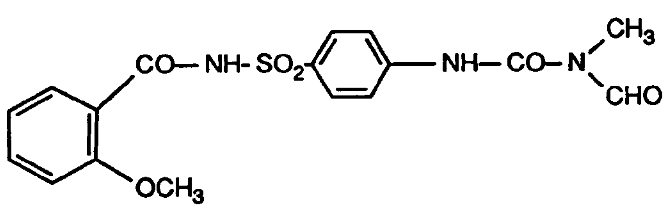

(IId)

oder der Formel IIe

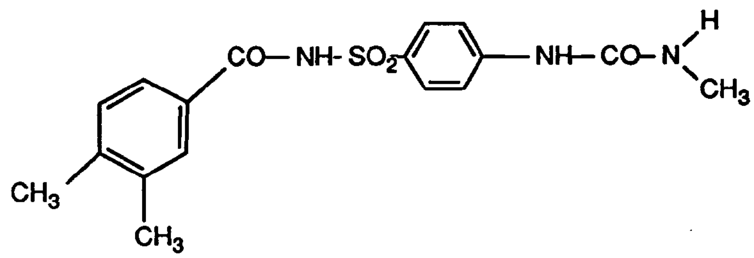

(IIe)

enthält.

14. Verfahren zum selektiven Bekämpfen von Unkräutern und Gräsern in Nutzpflanzenkulturen, dadurch gekennzeichnet, daß man die Kulturen, deren Saatgut oder deren Anbaufläche gleichzeitig oder unabhängig voneinander mit einer wirksamen Menge eines Herbizides der Formel I gemäß Anspruch 1 und einer herbizid-antagonistisch wirksamen Menge einer Verbindung der Formel II gemäß Anspruch 1 behandelt.

15. Verfahren gemäß Anspruch 14, dadurch gekennzeichnet, daß man Kulturpflanzenbestände oder Anbauflächen für Kulturpflanzen mit 0,001 bis 2 kg/ha einer Verbindung der Formel I gemäß Anspruch 1 und einer Menge von 0,005 bis 0,5 kg/ha einer Verbindung der Formel II gemäß Anspruch 1 behandelt.

16. Verfahren gemäß Anspruch 14 zum selektiven Bekämpfen von Unkräutern und Gräsern in Maiskulturen.

Europäisches Patentamt

# EUROPÄISCHER RECHERCHENBERICHT

Nummer der Anmeldung
EP 93 81 0765

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.5) |
|---|---|---|---|
| D,Y | EP-A-0 365 484 (CIBA-GEIGY)<br>* Seite 3, Zeile 39 - Seite 6, Zeile 29 *<br>* Seite 10, Zeile 5 - Seite 11, Zeile 8 *<br>* Ansprüche 38-44 *<br>--- | 1-16 | A01N47/36<br>//(A01N47/36, 47:36,25:32) |
| Y | WO-A-91 10660 (HOECHST)<br>* Seite 1, Absatz 4 - Seite 6, Absatz 1 *<br>* Seite 14, Absatz 3 *<br>* Seite 32; Tabelle 1, Verbindung Nr. 439 * | 1-16 | |
| D | & DE-A-40 00 503 (...)<br>--- | | |
| A | EP-A-0 492 367 (HOECHST)<br>* Seite 3, Zeile 2 - Seite 6, Zeile 7 *<br>* Seite 6, Zeile 15 - Zeile 17 *<br>* Seite 6, Zeile 46 - Zeile 47 *<br>--- | 1-16 | |
| P,A | WO-A-93 17016 (CIBA-GEIGY)<br>* Seite 11, Absatz 1 - Seite 14, Absatz 1 *<br>----- | 1-16 | |

RECHERCHIERTE SACHGEBIETE (Int.Cl.5)
A01N

Der vorliegende Recherchenbericht wurde für alle Patentansprüche erstellt

| Recherchenort | Abschlußdatum der Recherche | Prüfer |
|---|---|---|
| DEN HAAG | 10. Februar 1994 | Lamers, W |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPO FORM 1503 03.82 (P04C03)